# EUROPEAN PATENT SPECIFICATION

(11) **EP 1 623 089 B1**
(45) Date of publication and mention of the grant of the patent: **16.07.2008**
(21) Application number: 04732324.1
(22) Date of filing: 12.05.2004
(51) Int. Cl.: E21B 33/13, C04B 28/00

(54) **SELF ADAPTIVE CEMENT SYSTEMS**
SELBSTADAPTIERENDE ZEMENTSYSTEME
SYSTEMES DE CIMENT AUTO-ADAPTATIFS

(30) Priority: 14.05.2003 US 470341 P
(43) Date of publication of application: 08.02.2006
(73) Proprietor: SERVICES PETROLIERS SCHLUMBERGER, 75007 Paris (FR); SCHLUMBERGER TECHNOLOGY B.V., 2514 JG Den Haag (NL); SCHLUMBERGER HOLDINGS LIMITED, Road Town, Tortola (VG); SOFITECH N.V., 1180 Brussels (BE)
(72) Inventor: LE ROY-DELAGE, Sylvaine, F-75015 Paris (FR); MARTIN-BEUREL, Muriel, F-92142 Clamart Cedex (FR); KEITH, Dismuke, Etudes et Productions Schlumberger, F-92142 Clamart Cedex (FR); NELSON, Erik, Etudes et Productions Schlumberger, F-92142 Clamart Cedex (FR)
(74) Representative: Rzaniak, Martin
(86) International application number: PCT/EP2004/005479
(87) International publication number: WO 2004/101952

(56) References cited:
- EP-A- 0 530 768
- WO-A-01/74967
- GB-A- 2 271 350
- US-A- 4 664 816
- DATABASE WPI Section Ch, Week 200204 Derwent Publications Ltd., London, GB; Class A93, AN 2002-028940 XP002295616 & JP 2001 146457 A (DENKI KAGAKU KOGYO KK) 29 May 2001 (2001-05-29)
- DATABASE WPI Section Ch, Week 199209 Derwent Publications Ltd., London, GB; Class A93, AN 1992-072444 XP002296443 & ZA 9 100 876 A (SNASHALL H T) 24 December 1991 (1991-12-24)

## Description

### Technical Field of the Invention

The present invention relates to adaptive cement systems. In particular, the invention relates to cement systems which are "self-healing", i.e. system which can adapt to compensate for changes or faults in the physical structure of the cement, or which adapt their structure after the setting phase of the cement in the cementing of oil, gas, water or geothermal wells, or the like.

### Background of the Invention

During the construction of underground wells, it is common, during and after drilling, to place a liner or casing, secured by cement pumped into the annulus around the outside of the liner. The cement serves to support the liner and to provide isolation of the various fluid-producing zones through which the well passes. This later function is important since it prevents fluids from different layers contaminating each other. For example, the cement prevents formation fluids from entering the water table and polluting drinking water, or prevents water from passing into the well instead of oil or gas. In order to fulfill this function, it is necessary that the cement be present as an impermeable continuous sheath. However, for various reasons, over time this sheath can deteriorate and become permeable. The deterioration can be due to physical stresses caused by tectonic movements of temperature effects, chemical degradation of the cement, or various other reasons.

There have been a number of proposals to deal with the problems of deterioration of the cement sheath over time. One approach is to design the cement sheath to take into account physical stresses that might be encountered during its lifetime. Such an approach is described in US 6,296,057. Another approach is to include in the cement composition materials that improve the physical properties of the set cement. US 6,458,198 describes the addition of amorphous metal fibers to the cement slurry to improve its strength and resistance to impact damage. EP 1129047 and WO 00/37387 describe the addition of flexible materials (rubber or polymers) to the cement to confer a degree of flexibility on the cement sheath. WO 01/70646 and PCT/EP03/01578 describe cement compositions that are formulated so as to be less sensitive to the effects of temperature on the cement when setting.

A number of proposals have been made for designs of self-healing concretes for use in the construction industry. These are described in US 5,575,841, US 5,660,624, US 5,989,334, US 6,261,360 and US 6,527,849, and in "Three designs for the internal release of sealants, adhesives, and waterproofing chemicals into concrete to reduce permeability", Dry, C. M., Cement and Concrete Research 30 (2000) 1969-1977. None of these are immediately applicable to well cementing operations because of the need for the cement to be pumpable during placement and because of the pressure and temperature range.

It is an objective of the present invention to provide well cementing systems that can be placed by pumping in the normal manner, and which contain materials that allow the cement sheath to adapt its structure in response to environmental conditions.

### Summary of the Invention

More precisely, the present invention aims at providing well cementing systems that include at least one additive that reacts and/or swells when the set cement is in contact with an aqueous fluid, such as formation waters. This behavior has the effect of making the cement self-healing in the event of physical failure or damage.

The additive is a material which reacts/expands in contact with water - for instance from the underground formation which enters a fault in the cement matrix. Examples of such materials include super-absorbent polymers. Super-absorbent polymers are crosslinked networks of flexible polymer chains. The most efficient water absorbers are polymer networks that carry dissociated, ionic functional groups. When super-absorbent polymers absorb liquids, an elastic gel forms. The gel is a soft, deformable solid composed of water and the expanded polymer chains.

The polymer particles can be of almost any shape and size: spherical, fiber-like, ovoid, mesh systems, ribbons, etc., which allows their easy incorporation in cement slurries of comprising solid materials in discrete particle size bands. In practice, polymer particles ranging from about 10 to about 1500µ can be used.

The absorbent materials are preferably dry blended with the cement and any other solid components before transport to the well-site, mixing with water and placement in the well. The sizes and quantities will be selected to allow even dispersion through the cement matrix.

It has been found that though the super-absorbent polymers such as polyacrylamide and modified crosslinked polymethacrylate swell when incorporated in a cement slurry, they seem to release at least part of the absorbed water during the cement hydration and hence, have a reserve of absorbability that allow them to swell again if they are later exposed to water due to a crack of the matrix for instance. Since they are highly reactive with water, the concentration of super-absorbent added to the blend must remain relatively small, compositions with more than 3.2% of super-absorbent (by weight of cement) may typically have a viscosity too high for pumping the slurry in favorable conditions. In fact the maximum SAP concentration depends on the slurry density and also on the nature of the Super Absorbent Polymer.

It has been found that the addition of salts such as sodium chloride or calcium chloride for instance favors the rheology of the systems thereby enabling increasing the concentration of super-absorbent polymers. Cement slurries of lower density have also a greater acceptability of higher concentrations of super-absorbent polymers, even without salt.

In another aspect of the present invention, at least part of the super-absorbent polymers are encapsulated so that they are - for instance in the form of a resin or other material that releases the polymer in response to exposure to a downhole parameter (for instance such as temperature, a specific mineral system, pressure, shear etc). In yet another aspect, the rupture of the encapsulating means is actually induced by the failure of the cement matrix, in a way similar to the mechanism described by Dry for instance in US 5,575,841, US 5,660,624, US 5,989,334, US 6,261,360 and US 6,527,849.

### Detailed Description

A screening has been carried out for identifying super-absorbent polymers suitable for self-healing cementing applications. The main issues were to check the ability to dry blend the polymers with cement and to optimize the rheology and thickening time.

### Testing procedure

Tests have been carrying out by incorporating powders of various types of polymers as solid additives in cement slurries. Properties of the slurry as well as properties of the set cement have been studied.

The slurries were optimized with the mere objective of obtaining stability. Focus was to get acceptable plastic viscosity (PV) and yield stress (TY) at mixing time and after 20 minutes of conditioning. Free water and sedimentation tests were also carried out. Mixing and test procedure was according to API Spec 10.

The same equipment and bob was used for all rheology measurements, whatever the tested design. Many tests were performed at one slurry density 1.8 g/cm³ (15.8 lbm/gal) and one temperature (BHCT equal to 60°C). Some examples were studied at 1.44 g/cm³ (12 lbm/gal) and at 1.68 g/cm³ (14 lbm/gal). For lowest density, the temperature is equal 25 °C and 85 °C. The design is based on tap water and black Dyckerhoff North cement. Unless otherwise mentioned, all designs include an antifoam agent based on polypropylene glycol at 1.1 mL/kg (0.03 gallon per US gallons per sack of (43 kg) 94 lbs of cement (in other words, 1 gps = 88.78 cc/kg)), polynapthalene sulfonate as dispersing agent at 1.5 L/kg (0.04gps) and the superabsorbent polymer at concentration ranging form 0.1% BWOC (by weight of cement) to 0.9% BWOC for 1.8 g/cm³ (15.8 lbm/gal). Decreasing the density allows to increase the concentration in Super Absorbent Polymer. For instance for a given SAP the maximum concentration at 1.8 g/cm³ (15.8 lbm/gal) is 1% bwoc without salt in the mixing water and can reach 3 % bwoc at 1.44 g/cm³ (12 Ibm/gal).

Three types of superabsorbent polymers were tested:. S1, a polyacrylamide available form Lamberti, Italy. Three grades were tested, namely S1G- Lamseal^{®} G, with particles ranging form 500 µm to 1500 µm (density 1.25 g/cm³), SIGS - Lamseal^{®} GS, with particles of about 200 µm (density 1.48g/cm³), and S1GM, Lamseal^{®} GM, with particles of about 700 µm (density 1.47g/cm³). S2, a modified polyacrylate available from Itochu, Japan, under the name Aqualic^{®} CS-6HM, selected for its salt resistance, in particular its capacity to keep super absorbent capacity in high valent metal ions solutions. The average particle size is 100 µm and the density 1.46 g/cm³ . S3, a non soluble acrylic polymers , Norsocryl C200 from Atofina with particles of about 250 µm in average (density 1.6 g/cm³).

In the examples, bwoc or BWOC stands for by weight of cement and bwow or BWOW for by weight of water.

### Experimental Results

### Example 1: Addition Procedure

The first step was to define the best addition process. As shown in table 1 below, dry blending induces lower effects on rheology and free water and leads to an easy mixing

**Table 1**

| **Design** | **Reference** | **A1** | **A2** | **A3** |
|---|---|---|---|---|
| S1G (% bwoc) | | 0.1 | 0.1 | 0.1 |
| Note | | prehydrated (static) | dry blended | prehydrated under agitation at 2000RPM during 15 minutes. |

| **Mixing rheology** | | | | |
|---|---|---|---|---|
| Ty Pa (lbf/100ft²) | 1.1 (2.3) | 1.3 (2.8) | 0.67 (1.4) | 1.5 (3.2) |
| PV (cP) | 25.5 | 18.9 | 27.2 | 32.4 |

| **BHCT rheology at 60°C** | | | | |
|---|---|---|---|---|
| Ty Pa (lbf/100ft²) | 11.8 (24.6) | 10.1 (21.2) | 13.0 (27.3) | 25.3 (52.8) |
| PV (cP) | 20.9 | 18.4 | 26.6 | 33.3 |
| 10'/l'gel | 25/16 | 14/9 | 19/11 | 15/13 |
| Free Water mL | 1 | 7 | trace | 2.5 |
| Sedimentation mg/cm³ (ppg) | 136 (1.14) | 120 (1) | 48 (0.4) | 84(0.7) |

### Example 2: Influence of the particle sizes

For the S1 particles, the finer the particles, the higher the rheology and free water.

**Table 2**

| **Design** | **Reference** | **S1G** | **S1 GM** | **S1GS** |
|---|---|---|---|---|
| S1 (%bwoc) | | 0.1 | 0.1 | 0.1 |

| **Mixing rheology** | | | | |
|---|---|---|---|---|
| Ty Pa (Ibf/100ft²) | 1.1 (2.3) | 0.67 (10.4) | 1.3(2.7) | 3.2(6.7) |
| PV (cP) | 25.5 | 27.2 | 29 | 41 |

| **BHCT rheology at 60°C** | | | | |
|---|---|---|---|---|
| Ty Pa (lbf/100ft²) | 11.8 (24.6) | 13.1 (27.3) | 11.7 (24.4) | 18.5 (38.7) |
| PV (cP) | 20.9 | 26.6 | 35.6 | 40.9 |
| 10'/1'gel | 25/16 | 19/11 | 15/12 | 12/9 |
| Free Water mL | 1 | trace | 2 | 4 |
| Sedimentation mg/cm³ (ppb) | 136 (1.14) | 48 (0.4) | 120 (1) | 108 (0.9) |

### Example 3:

This test shows that cement slurry with super-absorbent polymers S1 are compatible with conventional fluid loss control additive (flac). This shows that the composition of the present invention can still be optimized by the addition of conventional additives such as dispersing agent, fluid loss control agent, set retarder, set accelerator and anti-foaming agent.

**Table 3**

| **Design** | **X3.1** | **X3.2** |
|---|---|---|
| SIG (% bwoc) | 0.1 | 0.1 |
| **Flac** | | 0.4 |
| **Mixing rheology** | | |
| Ty Pa (Ibf/100ft²) | 0.67 (1.4) | 3.8 (7.9) |
| PV (cP) | 27,2 | 104.7 |

| **BHCT rheology** at 60°C | | |
|---|---|---|
| Ty Pa (lbf/100ft²) | 13.0 (27.3) | 6.6 (13.7) |
| PV (cP) | 26.6 | 125 |
| 10'/l'gel | 19/11 | 1317 |
| Free Water mL | trace | trace |

### Example 4:

Results with the polymethacrylate based superabsorbent polymer S2 show less sensitivity to the addition mode.

**Table 4.1**

| | | | | | |
|---|---|---|---|---|---|
| **Design** | **Reference** | **X4.1** | **X4.2** | **X4.3** | **X4.4** |
| S2 (% bwoc) | | 0.05 | 0.1 | 0.1 | 0.15 |
| | - | dry blended | dry blended | prehydrated | dry blended |
| Mixing rheology | | | | | |
| Ty Pa (lbf/100ft²) | 1.1 (2.3) | 2.3 (4.8) | 2.7 (5.6) | 3.0 (6.4) | 2.5 (5.3) |
| PV(cP) | 25.5 | 31.9 | 35.9 | 37.9 | 64.8 |

| **BHCT rheology at 60°C** | | | | | |
|---|---|---|---|---|---|
| Ty Pa(lbf/100ft²) | 11.8 (24.6) | 9.7 (20.2) | 11.1 (23.3) | 9.9 (20.7) | 9.5 (19.9) |
| PV (cP) | 20.9 | 24.3 | 22.4 | 30.3 | 57 |
| 10'/1'gel | 25/16 | 17/9 | 15/9 | 12/7 | 12/10 |
| Free Water mL | 1 | | 2.8 | 4.5 | 5.5 |
| Sedimentation mg/cm³ (ppg) | 137 (1.14) | 72 (0.6) | 72 (0.6) | 108 (0.9) | 120(1) |

Polymer S2 can also be added in higher quantity, at least up to 0.45% BWOC as shown in the following table 4.2:

**Table 4.2**

| **Design** | **Reference** | **1** | **2** | **3** | **4** |
|---|---|---|---|---|---|
| antifoam mL/kg (gps) | 1.1 (0.03) | 1.1 (0.03) | 1.1 (0.03) | 1.1 (0.03) | 1.1 (C.03) |
| Dispersing agent mL/kg (gps) | 1.5(0.04) | 1.5 (0.04) | 1.5 (0.04) | 1.5 (0.04) | 1.5 (0.04) |
| S2 (% bwoc) | 0 | 0.9 (exces) | 0.2 | 0.45 | 0.45 |
| S2 (% bwow) | 0 | 2 | 0.44 | 1 | 1 |
| **Remark** | | **dry blended** | **dry blended** | **dry blended** | **prehydrated** |

| **Mixing rheology** | | | | | |
|---|---|---|---|---|---|
| Ty Pa (lbt/100ft²) | 1.1(2.3) | Too | 3.9 (8.3) | 9.4 (19.7) | 11.9 (24.9) |
| PV (cP) | 25.5 | viscous | 52.2 | 142.8 | 228.7 |
| Comment | | | | | Difficult mixing |

| **BHCT rheology at 60°C** | | | | | |
|---|---|---|---|---|---|
| Ty Pa (lbf/100ft²) | 11.8 (24.6) | | 6.8 (14.3) | 12.3 (25.8) | 5.5 (11.6) |
| PV (cP) | 20.9 | Too viscous | 40.3 | 172.5 | 178.4 |
| 10'/1'gel | 25/16 | | 14/9 | 25/7 | 18/9 |
| Free water mL | 1 | 0 | 7 | 6 | 4.5 |
| Sedim mg/cm³ (ppg) | 137 (1.14) | 12 (0.1) | 144 (1.2) | 24 (0.2) | 24 (0.2) |

### Example 5:

This example shows that the setting properties and the rheological properties can be optimized, a key requirement for well cementing applications. In all cases, the super-absorbent polymer was dry blended with the cement.

**Table 5.1**

| **Design** | | **8** | **9** | **10** |
|---|---|---|---|---|
| S2 (% bwoc) | | 0.1 | 0.1 | 0.1 |
| Antifoam mL/kg (gps) | | 1.1(0.03) | 1.1 (0.03) | 1.1 (0.03) |
| Lignosulfonate mL/kg (gps) | | 1.9 (0.05) | - | 0.96 (0.025) |
| Fluid loss control agent mL/kg (gps) | | 1.5 (0.4) | 1.5 (0.4) | 1.5 (0.4) |
| Polynaphtalene mL/kg (gps) | | 0.045 | 0.045 | 0.045 |
| **Mixing rheology** | Ty Pa (lbf/100ft²) PV (cP) | 4.9 (10.4) | 5.2 (11) | 5.1 (10.6) |
| | | 121.9 | 134 | 125.8 |
| **BHCT rheology** at 60°C | Ty Pa (lbf/100ft²) PV (cP) 10'/l'gel Free water mL Sedimentation mg/cm³ (ppg) Thickening test 100 Bc (hh:min) | 7.4(15.5) | 7.9 (16.7) | 7.6 (16) |
| | | 132 | 132.4 | 129 |
| | | 24/10 | 9/5 | 12/7 |
| | | 0 | 0 | 0 |
| | | 24 (0.2) | 24 (0.2) | 48 (0.4) |
| | | 13h 30 min | 3h 03 min | 8h 49 min |

**Table 5.2**

| **Design** | **29** | **30** | **31** | **32** |
|---|---|---|---|---|
| Antifoam mL/kg (gps) | 1.1 (0.03) | 1.1 (0.03) | 1.1 (0.03) | 1.1(0.03) |
| Lignosulfonate mL/kg (gps) | 0.96 (0.025) | 0.96 (0.025) | 0.96 (0.025) | 0.96(0.025) |
| Fluid loss control agent mL/kg (gps) | 15 (0.4) | 15 (0.4) | | 7.7 (0.2) |
| Polynaphtalene mL/kg (gps) | 1.7 (0.045) | 23 (0.6) | 1.7 (0.045) | 1.7 (0.045) |

| **Mixing rheology** | | | | |
|---|---|---|---|---|
| Ty Pa (lbf/100ft²) | 22.4 (46.8) | 20.0 (41.9) | 11 (23) | 15.3 (32) |
| PV (cP) | 303 | 293 | 92 | 154 |

| **BHCT rheology at 60°C** | | | | |
|---|---|---|---|---|
| Ty Pa (lbf/100ft²) | 15.3(32) | 16.7 (35) | 3.1(6.6) | 9.1(19) |
| PV (cP) | 226 | 248 | 66 | 145 |
| 10'/1'gel | 12/7 | 11/6 | 11/7 | 9/4 |
| Free water mL | Trace | Trace | 10 | 2.5 |

In the table 5.2, the designed slurries have a density of 1.89 g/cm³ (15.8 lbm/gal), and the concentration of super-absorbent S2 is 0.3% bwoc (corresponding to 0.7% bwow).

**Table 5.3**

| **Design** | **33** | **34** | **35** |
|---|---|---|---|
| Antifoam mL/kg (gps) | 1.1 (0.03) | 1.1 (0.03) | 1.1 (0.03) |
| Lignosulfonate mL/kg (gps) | 0.96 (0.025) | 0.96 (0.025) | - |
| NaCl (by weight of water) | | | 37 |
| Fluid loss control agent mL/kg (gps) | 7.7 (0.2) | 5.7 (0.15) | - |
| Polynaphtalene mL/kg (gps) | 1.7 (0.045) | 1.7 (0.045) | 34 (0.9) |

| **Mixing rheology** | | | |
|---|---|---|---|
| Ty Pa (lbf/100ft²) | 22.4 (46.8) | 21.5 (45) | 2.1(4.4) |
| PV (cP) | 223 | 208 | 61 |

| **BHCT rheology at 60°C** | | | |
|---|---|---|---|
| Ty Pa (lbf/100ft²) | 12.9 (27) | 23.9 (50) | 6.7(14) |
| PV (cP) | 217 | 240 | 51 |
| 10'/l'gel | 10/5 | 10/7 | 20/9 |
| Free water mL | 1.5 | 1 | - |
| API Fluid loss (ml) | | 170 | |

In the table 5.3, the designed slurries have a density of 1.89 g/cm³ (15.8 lbm/gal), and the concentration of super-absorbent S2 is 0.4% bwoc (corresponding to 0.9% bwow).

### Example 6:

This example shows that the addition of a salt allows an increase of the concentration of superabsorbent polymer while keeping acceptable rheology properties. In table 6.1, tests have been carried out with sodium chloride as added salt. In table 6.2, the added salt is calcium chloride. In both tables, the cements have a density of 1.89 g/cm³ (15.8ppg).

**Table 6.1**

| **Design** | **1 36** | | **37 38** | |
|---|---|---|---|---|
| S2 (% bwoc) | 0.9 | 0.9 | 0.9 | 0.9 |
| Antifoam mL/kg (gps) | 1.1 (0.03) | 1.1 (0.03) | 1.9 (0.05) | 1.9 (0.05) |
| NaCl (by weight of water) | 0 | 37 | 18.5 | 37 |
| Polynaphtalene(gps) | 0.04 | 0.9 | 0.9 | 1.5 |

| **Mixing rheology** | | | | |
|---|---|---|---|---|
| Ty Pa (lbf/100ft²) | Too viscous | 6.4(13.4) | 12.9(27.1) | 29.6(61.8) |
| PV (cP) | | 119 | 207 | 352 |

| **BHCT rheology at 60°C** | | | | |
|---|---|---|---|---|
| Ty Pa (lbf/100ft²) | | 14.7 (30.7) | 15.1 (31.5) | 28.2 (59) |
| PV (cP) | | 107 | 1059 | 433 |
| 10'/1'gel | | 28/19 | - | 433 |
| Free water mL | | Trace | | |

**Table 6.2**

| Design | 70 | 81 |
|---|---|---|
| Antifoam mL/kg (gps) | 1.9 (0.05) | 1.9 (0.05) |
| Flac mL/kg (gps) | 19(0.5) - | |
| Lignosulfonate mL/kg (gps) | 1.9 (0.05) | |
| Polynaphtalene mL/kg (gps) | - | 34 (0.9) |
| Sulfonated melamine -formaldehyde mL/kg (gps) | 4.6 (0.12) | - |
| Sodium chloride (%BWOW) | - | 37 |
| Calcium chloride (%BWOC) | 2 | - |
| S2 (%BWOC) | 0.45 | 0.9 |

| **Mixing rheology** | | |
|---|---|---|
| Ty Pa (lbf/100ft²) | 13.9 (29) | 14.3 (30) |
| PV (cP) | 244 | 173 |
| **BHCT tests** at 60°C | | |

| **Rheology** | | |
|---|---|---|
| Ty Pa (lbf/100ft²) | 16.3 (34) | 10.5 (22) |
| PV (cP) | 211 | 110 |
| 10' gel/l'stiring | 17/9 | 23/10 |
| **Free water (mL)** | 0 | 0 |
| **Fluid loss (mL API)** | 78 | 18 |

| | | |
|---|---|---|
| **Thickening time** | 5h17min I | - |

### Example 7:

This example shows that if the slurry density is lower, higher concentration of super-absorbent polymers can be used, even without the addition of a salt.

| **Design** | **X7.1** | **X7.2** | **X7.3** |
|---|---|---|---|
| Density g/cm³ (Ibm/gal) | 1.68 (14) | 1.44 (12) | 1.44 (12) |
| BHCT (deg C) | 60 | 25 | 85 |
| Antifoam mL/kg (gps) | 1.1(0.03) | 0.76 (0.02) | 0.76 (0.02) |
| Flac mL/kg (gps) | 15 (0.4) | - | - |
| Lignosulfonate mL/kg (gps) | 0.96 (0.025) | - | - |
| Polynaphtalene mL/kg (gps) | 1.7 (0.045) | 1.1 (0.03) | 1.1 (0.03) |
| S2 (%bwoc) | 0.9 | 3 | 3 |
| S2 (%bwow) | 1.4 | 2.4 | 2.4 |

| **Mixing rheology** | | | |
|---|---|---|---|
| Ty Pa (lbf/100ft²) | 10.1 (21.18) | 9.2 (19.2) | 9.4 (19.63) |
| PV (cP) | 156.9 | 90.3 | 86.39 |

| **Rheology at BHCT** | | | |
|---|---|---|---|
| Ty Pa (lbf/100ft²) | 23.6(49.31) | 13.2(27.5) | 2.3(4.92) |
| PV (cP) | 180.5 | 169.7 | 82.78 |
| 10' gel/l' stiring | 32/22 | 28/12 | 11/6 |
| Fluid loss (mL API) | - | 149 | 240 |

### Example 8:

Cement samples comprising super-absorbent polymers were taken form the sedimentation column and additional water was added at the surface of broken pieces to simulate contact with formation water after a crack. Tests were performed at room temperature and at 60°C. In all cases, swelling was observed showing that the super-absorbent polymer particles remain effectively available to absorb additional water (even though the cement matrix always comprises residual water).

### Example 9:

This test was performed with super-absorbent S3. Good rheology is obtained.

**Table9**

| **Design** | **5** | **13** | **19** |
|---|---|---|---|
| Density g/cm³ (Ibm/gal) | 1-89 (15.8) | 1.89 (15.8) | 1.89 (15.8) |
| BHCT (deg C) | 60 | 60 | 60 |
| Antifoam mL/kg (gps) | 1.9 (0.05) | 1.1 (0.03) | 1.9 (0.05) |
| Flac mL/kg (gps) | 19 (0.5) | 15 (0.4) | - |
| Lignosulfonate mL/kg (gps) | 1.9 (0.05) | 0.96 (0.025) | - |
| Polynaphtalene mL/kg (gps) | - | 1.9 (0.05) | 34 (0.9) |
| Sulfonated melamine formaldehyde mL/kg (gps) | 4.6 (0.12) | - | - |
| Sodium chloride (%BWOW) | - | - | 37 |
| Calcium chloride (%BWOC) | 2 | - | - |
| S3 (%bwoc) | 3 | 0.9 | 2 |
| S3 (% bwow) | 7.7 | 2.2 | 4.5 |

| **Mixing rheology** | | | |
|---|---|---|---|
| Ty Pa (Ibf/100ft²) | 12.4 (26) | 9.0 (19) | 1.9 (4) |
| PV (cP) | 262 | 195 | 54 |

| **BHCT Rheology** | | | |
|---|---|---|---|
| Ty Pa (Ibf/100ft²) | 6.2 (13) | 9.0 (19) | 1.9 (4) |
| PV (cP) | 154 | 145 | 30 |
| 10'gel/1'stiring | 7/5 | 14/4 | 15/6 |
| **Free water (mL)** | 0 | 0 | - |
| **Fluid loss (mL API)** | 48 | - | - |

## Claims

1. A composition for well cementing comprising:
- a pumpable slurry of cement,
- water and
- a material having residual water-absorption properties after the setting of the cement, so that said material is susceptible to swell in contact with underground water in case of failure of the cement matrix.

2. The composition of claim 1, wherein said material is a super-absorbent polymer.

3. The cement system of claim 1, wherein the super-absorbent polymer is selected from the list consisting of polymethacrylate and polyacrylamide or a non-soluble acrylic polymers.

4. The cement system according to any of claims 2 to 3, wherein the super-absorbent polymer is added to the slurry dry-blended with the cement.

5. The cement system according to any of claims 2 to 4, wherein the super-absorbent polymer is added at a concentration between 0.05% and 3.2% by weight of cement..

6. The cement system according to claims 2 to 5 further comprising a salt.

7. The cement system of claim 6, wherein said salt is sodium chloride or calcium chloride.

8. The cement slurry according to claims 2 to 7, wherein the super-absorbent polymer is added under the form of particles ranging from 10 to 1500µ.

9. The cement system according to any of the preceding claims, whereby the material is provided in a capsule that releases the material in response to exposure of the cement to at least one downhole parameter.

10. The cement system according to any of claims 1 to 9, whereby the material is provided in a capsule that releases the material when the cement matrix cracks.

11. The cement system according to any of the preceding claims further comprising at least one additive selected from the list consisting of dispersing agent, fluid loss control agent, set retarder, set accelerator and anti-foaming agent.

## Patentansprüche

1. Zusammensetzung zum Zementieren von Bohrlöchern, die umfasst:
- einen pumpfähigen Zementschlamm,
- Wasser und
- ein Material, das Restwasser-Absorptionseigenschaften besitzt, nachdem der Zement gehärtet ist, so dass das Material bei einem Kontakt mit dem unterirdischen Wasser aufquellen kann, falls die Zementgrundmasse fehlerhaft ist.

2. Zusammensetzung nach Anspruch 1, wobei das Material ein hochabsorbierendes Polymer ist.

3. Zementsystem nach Anspruch 1, wobei das hochabsorbierende Polymer aus der Liste ausgewählt ist, die aus Polymethacrylat und Polyacrylamid oder aus nicht löslichen Acrylpolymeren besteht.

4. Zementsystem nach einem der Ansprüche 2 bis 3, wobei das hochabsorbierende Polymer zu dem Schlamm, der mit dem Zement trockengemischt ist, hinzugefügt ist.

5. Zementsystem nach einem der Ansprüche 2 bis 4, wobei das hochabsorbierende Polymer in einer Konzentration im Bereich von 0,05 bis 3,2 Gew.-% des Zements hinzugefügt ist.

6. Zementsystem nach den Ansprüchen 2 bis 5, das ferner ein Salz enthält.

7. Zementsystem nach Anspruch 6, wobei das Salz Natriumchlorid oder Calciumchlorid ist.

8. Zementschlamm nach den Ansprüchen 2 bis 7, wobei das hochabsorbierende Polymer in Form von Partikeln im Bereich von 10 bis 1500 µm hinzugefügt ist.

9. Zementsystem nach einem der vorhergehenden Ansprüche, wobei das Material in einer Kapsel vorhanden ist, die das Material in Reaktion auf die Beaufschlagung des Zements mit wenigstens einem Bohrlochparameter freigibt.

10. Zementsystem nach einem der Ansprüche 1 bis 9, wobei das Material in einer Kapsel vorhanden ist, die das Material freigibt, wenn die Zementgrundmasse bricht.

11. Zementsystem nach einem der vorhergehenden Ansprüche, das ferner wenigstens ein Additiv umfasst, das aus der Liste ausgewählt ist, die aus einem Dispersionsmittel, einem Fluidverlust-Steuermittel, einem Härtungsverzögerer, einem Härtungsbeschleuniger und einem Schaumverhinderungsmittel besteht.

## Revendications

1. Composition pour cimenter un puits, comprenant :
- une suspension de ciment pompable,
- de l'eau et
- un matériau ayant des propriétés d'absorption d'eau résiduelle après la prise du ciment, de sorte que ledit matériau est susceptible de gonfler au contact de l'eau souterraine en cas de rupture de la matrice de ciment.

2. Composition selon la revendication 1, dans laquelle ledit matériau est un polymère superabsorbant.

3. Système de ciment selon la revendication 1, dans lequel le polymère superabsorbant est choisi dans le groupe constitué par un polyméthacrylate et un polyacrylamide ou un polymère acrylique non soluble.

4. Système de ciment selon l'une quelconque des revendications 2 à 3, dans lequel le polymère superabsorbant est ajouté à la suspension mélangé à sec avec le ciment.

5. Système de ciment selon l'une quelconque des revendications 2 à 4, dans lequel le polymère superabsorbant est ajouté à une concentration entre 0,05 % et 3,2 % en poids de ciment.

6. Système de ciment selon les revendications 2 à 5, comprenant en outre un sel.

7. Système de ciment selon la revendication 6, dans lequel le sel est le chlorure de sodium ou le chlorure de calcium.

8. Suspension de ciment selon les revendications 2 à 7, dans laquelle le polymère superabsorbant est ajouté sous la forme de particules allant de 10 à 1500 µm.

9. Système de ciment selon l'une quelconque des revendications précédentes, dans lequel le matériau est fourni dans une capsule qui libère le matériau en réponse à une exposition du ciment à au moins un paramètre de fond de trou.

10. Système de ciment selon l'une quelconque des revendications 1 à 9, dans lequel le matériau est fourni dans une capsule qui libère le matériau lorsque la matrice de ciment se fissure.

11. Système de ciment selon l'une quelconque des revendications précédentes, comprenant en outre au moins un additif choisi dans le groupe constitué par un agent dispersant, un agent de contrôle de perte de fluide, un retardateur de prise, un accélérateur de prise et un agent antimousse.
